# EUROPÄISCHE PATENTSCHRIFT

(11) **EP 0 665 717 B1**
(45) Veröffentlichungstag und Bekanntmachung des Hinweises auf die Patenterteilung: **02.10.1996**
(21) Anmeldenummer: 94923668.1
(22) Anmeldetag: 23.08.1994
(51) Int. Cl.: A22B 5/08

(54) **ENTHAARUNGSVORRICHTUNG**
HAIR-SCRAPING DEVICE
DISPOSITIF DE DEPILAGE

(30) Priorität: 26.08.1993 DE 4328738
(43) Veröffentlichungstag der Anmeldung: 09.08.1995
(73) Patentinhaber: PHOENIX AKTIENGESELLSCHAFT, 21079 Hamburg (DE)
(72) Erfinder: MEIER, Ernst-August, D-31162 Bad Salzdetfurth (DE); SCHIRMER, Stefan, D-30451 Hannover (DE)
(86) Internationale Anmeldenummer: DE9400962
(87) Internationale Veröffentlichungsnummer: WO9505745

(56) Entgegenhaltungen:
- DE-A- 3 138 891
- US-A- 1 502 749
- US-A- 2 296 873
- US-A- 2 604 656
- US-A- 4 907 317
- US-E- R E15 318

## Beschreibung

Die Erfindung betrifft eine Enthaarungs vorrichtung als Teil einer Schlachtlinie, insbesondere für das Schlachten von Schweinen, bestehend aus einem Enthaarungsschläger aus elastomerem Werkstoff mit vorzugsweise eingebetteten Festigkeitsträgern, der ein im wesentlichen rechteckiger Grundkörper ist mit einem Anfangsbereich A, einem Endbereich B und einem mittigen Bereich C, wobei der Anfangsbereich A dicker ist als der Endbereich B und wobei ferner innerhalb der Bereiche A und B Bohrungen vorbanden sind; einem Anschraubbereich aus Metall, an den der dickere Bereich A des Grundkörpers geschraubt ist, wobei mittels der Bohrungen und eines Schrauben-Bolzen-Systems sowie einer Klemmplatte eine feste Verbindung des Enthaarungsschlägers erfolgt; einem Anschlag, an dem sich der Enthaarungsschläger über den Prallhocker bei extremer Verformung abstützt; sowie aus winkelförmigen Kratzern aus Metall, die an der Vorderseite (Arbeitsseite) des Enthaarungsschlägers innerhalb des Bereiches B angeordnet sind, wobei mittels der Bohrungen und einer Nietverbindung eine fest Verankerung erfolgt (US-A-2 604 656).

Aus der US-A-15 318 (Fig. 1 bis 3) ist ferner eine Vorrichtung bekannt, bei der der Enthaarungsschläger auf der Vorderseite (Arbeitsseite), wo sich die Kratzer befinden, eine bauchförmige Erhebung aufweist, und zwar im Bereich des auf der Rückseite vorhandenen Anschlages. Diese Erhebung ist mit Hohlkammern, die in Schlägerquerrichtung verlaufen, und/oder mit Schlitzen, die in Schlägerlängsrichtung angeordnet sind, ausgestattet.

Diese Hohlkammern bzw. Schlitze sollen die Biegeverformung erleichtern. Nachteilig ist hier, daß durch die von den Hohlkammern bzw. Schlitze hervorgerufene Materialschwächung bei extremer Biegeverformung zu beidseitigen Rißbildungen führen und damit den Enthaarungsschläger unbrauchbar machen, was insbesondere die Fig. 3 der US-A-15 318 verdeutlicht.

Zwischenzeitlich ist man dazu übergegangen, den Grundkörper des Enthaarungsschlägers so auszugestalten, daß dessen Anfangsbereich A dicker ist als dessen Endbereich B, wobei hinsichtlich dieses Grundkonzeptes auf die US-A-4 907 317 (Fig. 1) verwiesen wird. Dabei sind auf der Arbeitsseite, wo sich die Kratzer befinden, längs- und diagonalverlaufende Verstärkungsrippen angeordnet, und zwar im mittigen Bereich C.

Bei den in den drei vorgenannten Druckschriften dargestellten Vorrichtungen, die den betriebsfertigen Zustand beschreiben, besitzt der Enthaarungsschläger jedoch keinen Prallhocker, dessen Vorhandensein im Rahmen der erfindungsmäßgen Vorrichtung von wesentlicher Bedeutung ist.

Die Aufgabe der Erfindung besteht nun darin, einen Prallhocker bereitzustellen, der selbst bei extremer Biegeverformung keinem Verschleiß (z.B. Rißbildung) unterliegt.

Gelöst wird diese Aufgabe durch eine Enthaarungsvorrichtung gemäß Kennzeichen des Anspruchs 1.

Zweckmäßigerweise weist der Prallhocker mehrere Rillennuten, insbesondere zwei bis fünf Rillennuten, auf. Dabei ist es ferner vorteilhaft, wenn die Rillennuten eine unterschiedliche Tiefe und/oder Breite besitzen, wobei die Tiefe und/oder Breite zum Prallhockerende hin zunimmt/zunehmen.

Die Erfindung wird nun anhand eines Ausführungsbeispiels unter Bezugnahme auf schematische Zeichnungen beschrieben.

Es zeigen:
- Fig. 1: die Rückseite des Enthaarungsschlägers mit integrierten Prallhocker;
- Fig. 2: die Vorderseite des Enthaarungsschlägers mit angeordneten Kratzern;
- Fig. 3: die Seitenansicht der betriebsbereiten Vorrichtung;
- Fig. 4: die Seitenansicht des Enthaarungsschlägers mit den erfindungsgemäßen Rillennuten.

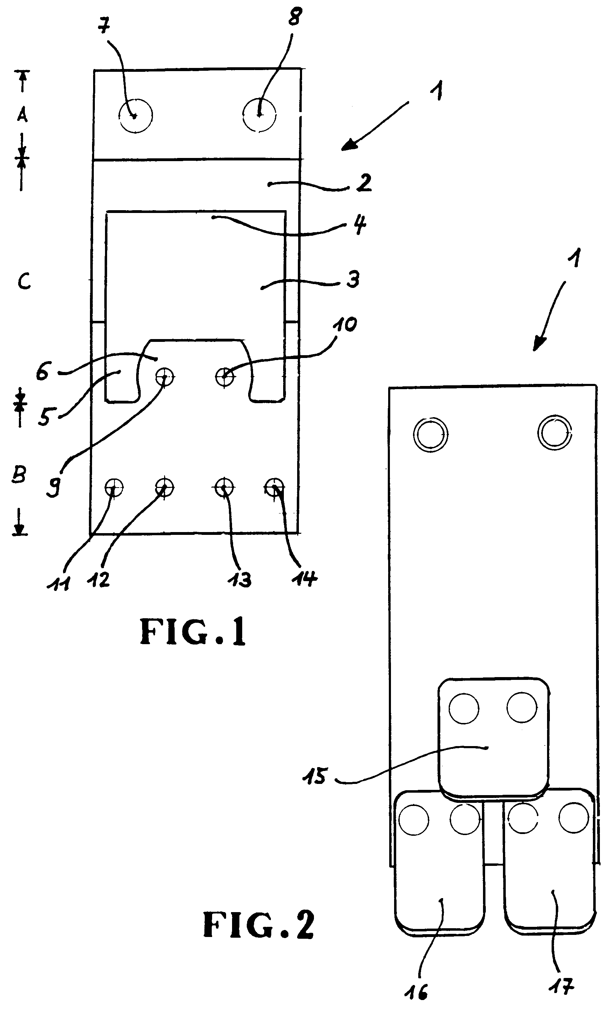

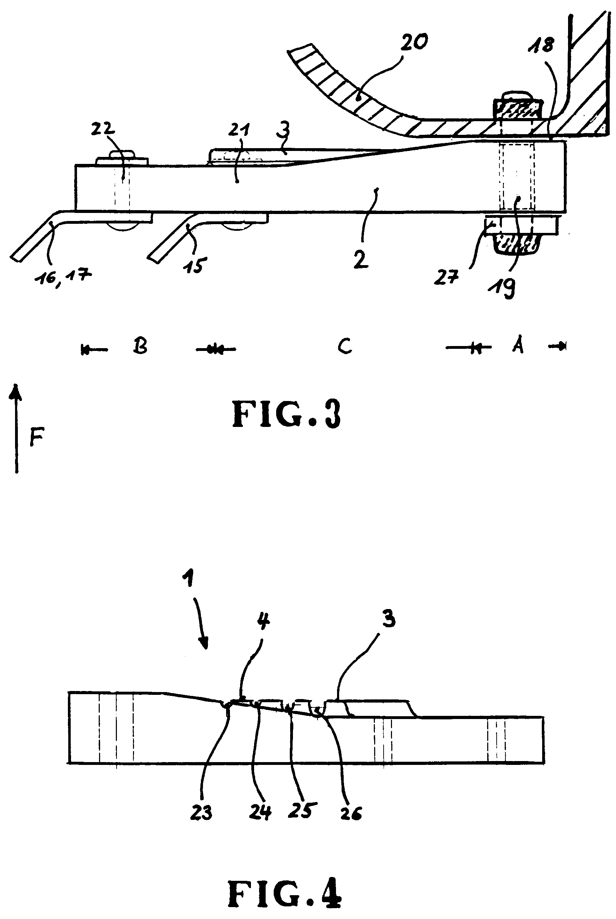

Fig. 1 zeigt einen Enthaarungsschläger (1) aus elastomerem Werkstoff (Gummi oder gummiähnlichem Kunststoff) mit eingebetteten Festigkeitsträgern, der ein im wesentlichen rechteckiger Grundkörper (2) mit den Zonen A (Anfangsbereich), B (Endbereich) und C (mittiger Bereich) ist. Auf seiner Rückseite (hier dargestellt) besitzt der Enthaarungsschläger innerhalb des Bereiches C einen Prallhocker (3), der einstückig mit dem Grundkörper (2) als Unterbau ausgebildet und 7 bis 10 mm stark ist, wobei der Bereich des Prallhockerendes (5) eine Aussparung (6) aufweist. über die besonders verschleißanfällige Zone im Bereich des Prallhockeranfanges (4) wird in Verbindung mit den Fig. 3 und 4 noch detailliert eingegangen. In den Zonen A und B sowie im Bereich der Aussparung (6) sind zwei Bohrungen (7, 8) für die Verschraubung des Enthaarungsschlägers innerhalb des Anschraubbereiches - Fig. 3 - sowie sechs Bohrungen (9 bis 14) für die Befestigung der Kratzer - Fig. 2 und 3 - vorhanden.

Fig. 2 zeigt die Vorderseite des Enthaarungsschlägers (1) mit drei integrierten Kratzern (15, 16, 17) aus Metall.

Die Fig. 3 zeigt nun die Seitenansicht der betriebsbereiten Vorrichtung. Dabei ist der dickere Anfangsbereich A des Grundkörpers (2) in dem Anschraubbereich (18) mittels der Bohrungen (7, 8) - Fig. 1 - und eines Schrauben-Bolzen-Systems (19) sowie einer Klemmplatte (27) fest verankert. Der Bereich (18) ist auf der dem Prallhocker (3; Bereich C) zugewandten Seite (Rückseite des Enthaarungsschlägers) mit einem zusätzlichen Anschlag (20) versehen. An der Vorderseite (Arbeitsseite) des Enthaarungsschlägers sind innerhalb des Endbereiches B sowie im Bereich der Aussparung die Kratzer (15, 16, 17) in Form von Winkelstücken angeordnet, wobei mittels der Bohrungen (9 bis 14) - Fig. 1 - und einer Nietverbindung (21, 22) eine feste Verankerung erfolgt.

Über die Kratzer (15, 16, 17) wird unter Einwirkung der Kraft F der Enthaarungsschläger periodisch auf Biegung (in Pfeilrichtung) belastet. Dabei ist die Beanspruchung in der Regel unterschiedlich, wobei einzelne Stöße allerdings so groß sind, daß der Federweg durch den Anschlag (20) begrenzt wird. In diesem Zusammenhang hat also der Prallhocker (3) die Bedeutung eines Anschlagpuffers. Da nun Gummi inkompressibel ist, wird die Gummischicht des Prallhockers bei den großen Verformungen extrem gestaucht und dabei unvorteilhaft mit großen Materialbeanspruchungen belastet. Eine typische Ausfallkonstellation eines Enthaarungsschlägers ist ein frühzeitiges Zerreißen des Prallhockers (3) über den gesamten tragenden Querschnitt. Teilweise löst sich der Prallhocker auch vollständig vom Unterbau ab und wirft Falten. Besonders verschleißanfällig ist der Bereich des Prallhockeranfanges (4), und zwar bedingt durch einen Steifigkeitssprung innerhalb dieser Zone.

Fig . 4 zeigt nun einen Enthaarungsschläger (1), wobei der Prallhocker (3) vier Rillennuten (23, 24, 25, 26) besitzt, die eine unterschiedliche Tiefe und Breite aufweisen, wobei die Tiefe und Breite zum Prallhockerende (5) hin zunehmen.

## Patentansprüche

1. Enthaarungsvorrichtung als Teil einer Schlachtlinie, insbesondere für das Schlachten von Schweinen, bestehend aus
- einem Enthaarungsschläger (1) aus elastomerem Werkstoff mit einer Vorderseite oder Arbeitsseite und einer Rückseite und mit vorzugsweise eingebetteten Festigkeitsträgern, der ein im wesentlichen rechteckiger Grundkörper (2) ist mit einem Anfangsbereich A, einem Endbereich B und einem mittigen Bereich C, wobei der Anfangsbereich A dicker ist als der Endbereich B und wobei ferner innerhalb der Bereiche A und B Bohrungen (7 bis 14) vorhanden sind;
- einem Anschraubbereich (18) aus Metall, an den der dickere Bereich A des Grundkörpers (2) geschraubt ist, wobei mittels der Bohrungen (7, 8) und eines Schrauben-Bolzen-Systems (19) sowie einer Klemmplatte (27) eine feste Verbindung des Enthaarungsschlägers mit der Enthaarungsvorrichtung erfolgt;
- einem Anschlag (20), an dem sich der Enthaarungsschläger bei extremer Verformung abstützt; sowie aus
- winkelförmigen Kratzern (15, 16, 17) aus Metall, die an der Vorderseite des Enthaarungsschlägers innerhalb des Bereiches B angeordnet sind, wobei mittels der Bohrungen (9 bis 14) und einer Nietverbindung (21, 22) eine feste Verankerung erfolgt;
dadurch gekennzeichnet,
- daß der Enthaarungsschläger (1) auf seiner Rückseite, wo eine Abstufung verläuft, innerhalb des mittigen Bereiches C einen Prallhocker (3) besitzt, der einstückig mit dem Grundkörper ausgebildet ist, wobei im Bereich eines Prallhockerendes (5) eine Aussparung (6) vorhanden ist, in dessem Bereich der Enthaarungsschläger ebenfalls Bohrungen (9, 10) aufweist;
- daß sich der Enthaarungsschläger über den Prallhocker (3) bei extremer Verformung an dem Anschlag (20) abstützt;
- daß die winkelförmigen Kratzer (15, 16, 17) auch im Bereich der Aussparung (6) angeordnet sind; und
- daß wenigstens eine in Querrichtung verlaufende Rillennut im Bereich des Prallhockeranfanges (4) vorhanden ist.

2. Vorrichtung nach Anspruch 1, dadurch gekennzeichnet, daß der Prallhocker (3) mehrere Rillennuten, insbesondere zwei bis fünf Rillennuten, aufweist.

3. Vorrichtung nach Anspruch 2, dadurch gekennzeichnet, daß der Prallhocker (3) vier Rillennuten aufweist.

4. Vorrichtung nach Anspruch 2 oder 3, dadurch gekennzeichnet, daß die Rillennuten (23, 24, 25, 26) eine unterschiedliche Tiefe und/oder Breite aufweisen, wobei die Tiefe und/oder Breite zum Prallhockerende (5) hin zunimmt/zunehmen.

## Claims

1. A hair-removal device as part of a slaughterline, especially for the slaughter of hogs, consisting of
- a hair-removal beater (1) of elastomeric material, which has a front or working side and a rear and strength-carriers preferably embedded and is an essentially rectangular foundation (2) with a starting region A, an end region B and a middle region C, the starting region A being thicker than the end region B, whilst within the regions A and B there are in addition drilled holes (7 to 14);
- a screw-on region (18) of metal to which the thicker region A of the foundation (2) is screwed, a firm connection of the hair-removal beater to the hair-removal device being effected by means of the drilled holes (7, 8) and a screw-bolt system (19) as well as a clamp-plate (27);
- a stop (20) against which under extreme deformation the hair-removal beater bears; as well as of
- angular scrapers (15, 16, 17) of metal which are arranged on the front of the hair-removal beater within the region B, a firm anchorage being effected by means of the drilled holes (9 to 14) and a rivet connection (21, 22);
characterized in that
- on its rear where there is a graduation, the hair-removal beater (1) has within the middle region C , a rebound-hump (3) which is made in one piece with the foundation, whilst in the region of the end (5) of the rebound-hump there is a recess (6) in the region of which the hair-removal beater likewise exhibits drilled holes (9, 10);
- under extreme deformation the hair-removal beater bears via the rebound-hump (3) gainst the stop (20);
- the angular scrapers (15, 16, 17) are also arranged in the region of the recess (6); and
- in the region of the start (4) of the rebound-hump there is at least one groove running in the transverse direction.

2. A device as in Claim 1, characterized in that the rebound-hump (3) exhibits a number of grooves, especially from two to five grooves.

3. A device as in Claim 2, characterized in that the rebound-hump (3) exhibits four grooves.

4. A device as in Claim 2 or 3, characterized in that the grooves (23, 24, 25, 26) exhibit different depths and/or widths, with the depth and/or width increasing towards the end (5) of the rebound-hump.

## Revendications

1. Dispositif de dépilage en tant que partie d'une chaîne d'abattage, en particulier pour l'abattage des porcs, constitué par
- un battoir de dépilage (1) en matériau élastomère présentant une face avant ou face de travail et une face arrière et comportant des renforts, de préférence noyés à l'intérieur, battoir qui est un corps de base (2) sensiblement rectangulaire, présentant une région de tête A, une région d'extrémité B et une région médiane C, la région de tête A étant plus épaisse que la région d'extrémité B et des forures (7 à 14) étant en outre présentes à l'intérieur des régions A et B;
- une région de boulonnage (18) en métal, au niveau de laquelle la région plus épaisse A du corps de base (2) est boulonnée, un raccordement ferme du battoir de dépilage au dispositif de dépilage étant réalisé au moyen des forures (7, 8) et d'un système de boulons filetés (19), ainsi que d'une plaquette de serrage (27) ;
- une butée (20), sur laquelle le battoir de dépilage s'appuie en cas de déformation extrême;
ainsi que par
- des racloirs de forme angulaire (15, 16, 17) en métal, qui sont disposés sur la face avant du battoir de dépilage à l'intérieur de la région B, un ancrage ferme étant réalisé au moyen des forures (9 à 14) et d'un raccordement par rivets (21, 22) ;
caractérisé
- en ce que le battoir de dépilage (1), sur sa face arrière où un décrochement s'étend, comporte, à l'intérieur de la région médiane C, un socle d'impact (3) qui est réalisé en une seule pièce avec le corps de base, un évidement (6) étant présent dans la région d'une extrémité (5) du socle d'impact, région dans laquelle le battoir de dépilage présente également des forures (9, 10) ;
- en ce que le battoir de dépilage s'appuie sur la butée (20) par l'intermédiaire du socle d'impact (3) , en cas de déformation extrême ;
- en ce que les racloirs de forme angulaire (15, 16, 17) sont eux aussi disposés dans la région de l'évidement (6) ; et
- en ce qu'au moins une rainure, s'étendant en direction transversale, est présente dans la région de la tête (4) du socle d'impact.

2. Dispositif selon la revendication 1, caractérisé en ce que le socle d'impact (3) présente plusieurs rainures, en particulier de deux à cinq rainures.

3. Dispositif selon la revendication 2, caractérisé en ce que le socle d'impact (3) présente quatre rainures.

4. Dispositif selon la revendication 2 ou 3, caractérisé en ce que les rainures (23, 24, 25, 26) présentent une profondeur différente et/ou une largeur différente, la profondeur et/ou la largeur augmentant en direction de l'extrémité (5) du socle d'impact.
